# EUROPEAN PATENT APPLICATION

(11) **EP 0 556 168 A1**
(43) Date of publication of application: **18.08.1993**
(21) Application number: 93850012.1
(22) Date of filing: 20.01.1993
(51) Int. Cl.: H05B 1/02, G05D 23/19

(54) **Thermostat**

(30) Priority: 20.01.1992 SE 9200157
(71) Applicant: LVI PRODUKTER AB, S-531 Järpas (SE)
(72) Inventor: Lyrenäs, Leif, S-521 30 Falköping (SE)
(74) Representative: Lettström, Richard Wilhelm

(57) **Abstract**

The invention relates to an arrangement for regulating the output of an electronically controlled radiator (14), preferably such a radiator which stores heat, the arrangement including an adjustable thermostatic means (7) for setting the desired room temperature, and room temperature sensing means (5) which senses the temperature attained in the room space. In addition, the arrangement includes means (6) for sensing the inherent heat of the radiator (14), its "self-heat", and a regulating unit (1) for counteracting power supply for heating when the self-heat is sufficient; The arrangement will thus make up for the momentarily stored self-heat of the radiator.

## Description

The present invention relates to an arrangement for regulating the output of an electronically controlled radiator, preferably such a radiator which stores heat, the arrangement including an adjustable thermostatic means for setting the desired room temperature, and room temperature sensing means which senses the temperature attained in the room space.

From EP-A-o143358 an arrangement of the kind mentioned above is previously known. This arrangement has a sensor measuring the surface temperature, the output unit being disconnected when the sensor reaches a predetermined maximum temperature.

Previously known arrangements utilize electronic thermostats which are adapted to sense the temperature of the room space and then to compare this temperature with the value set on the thermostat. The system delivers current proportionally to the radiator where it is converted into heat. In electric radiators carrying oil this means that the electric immersion heater will heat oil. In regulating devices of this nature previously known there is an inconvenience residing in the fact that at an extreme outdoor temperature change, for example such that the temperature is strongly lowered, the room temperature sensor of the radiator will be affected in such a way that the power supplied to the radiator will raise strongly, which has in turn the effect that the air around the temperature sensing means will be heated by the radiator itself, with the consequence that the regulating unit of the radiator obtains a misleading picture of the heat in the room space. Then the power supply to the heating unit of the radiator can be interrupted prematurely, whereby the radiator will give off heat very unevenly to the room space.

In this application the term "radiator" refers to such heating devices which include a heat source emitting radiation and/or convection heat. Furthermore, the term "room" refers to the space which the radiator is intended to heat.

The object of the present invention is to provide an arrangement of the kind mentioned in the introduction which produces, while doing away whith the inconveniences mentioned above, such an output that it will maintain an even room temperature in spite of extreme outdoor or indoor temperature changes.

This object is attained according to the invention by the feature that the arrangement will include, in addition, means for sensing the inherent heat of the radiator, its "self-heat", and that a regulating unit is provided for counteracting power supply for heating when the self-heat is sufficient for the purpose.

The arrangement according to invention will thus make up for the momentarily stored self-heat of the radiator.

Preferred embodiments of the invention have been allotted the characteristics defined in the subclaims.

In one embodiment nominal and actual values are compared at short intervals. Thus the regulating equipment includes a compensation system based on the surface temperature of the radiator body which makes up for the momentarily stored self-heat of the radiator. This making up or compensation brings with it that the radiator is able to maintain an even room temperature, e.g. within the range of ±0,5 °C, also at extreme outdoor temperature changes. A prerequisite in order that the arrangement according to the invention will operate satisfactorily is that the output of the radiator is sufficient for the room space concerned. By means of the arrangement according to the invention it is attained that an even temperature is maintained in a room with no need for sensing means sensing outdoor temperature.

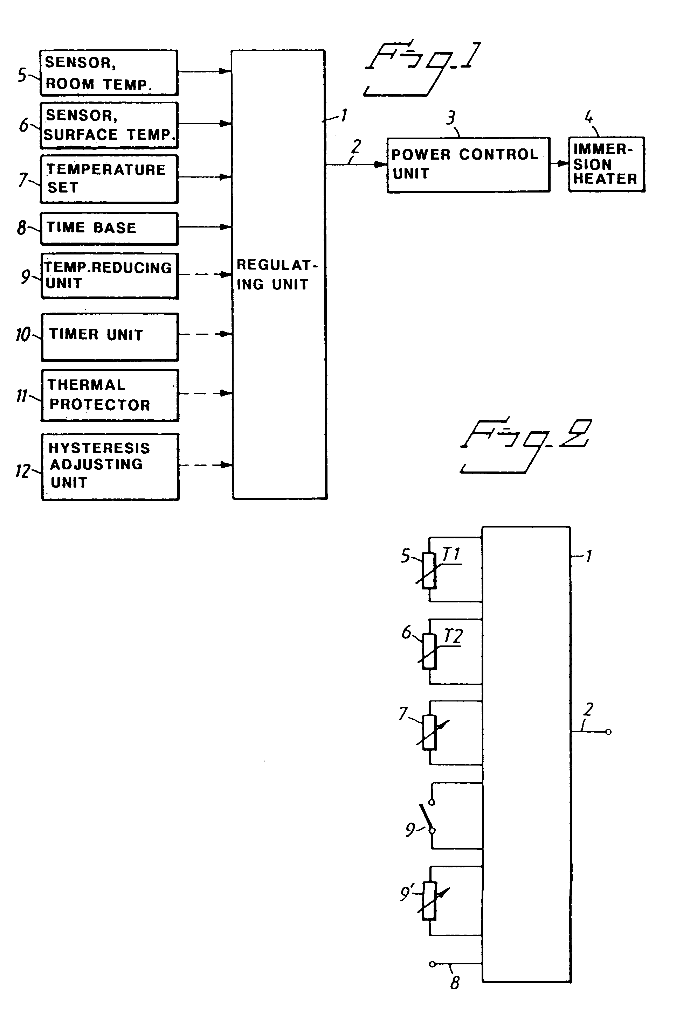

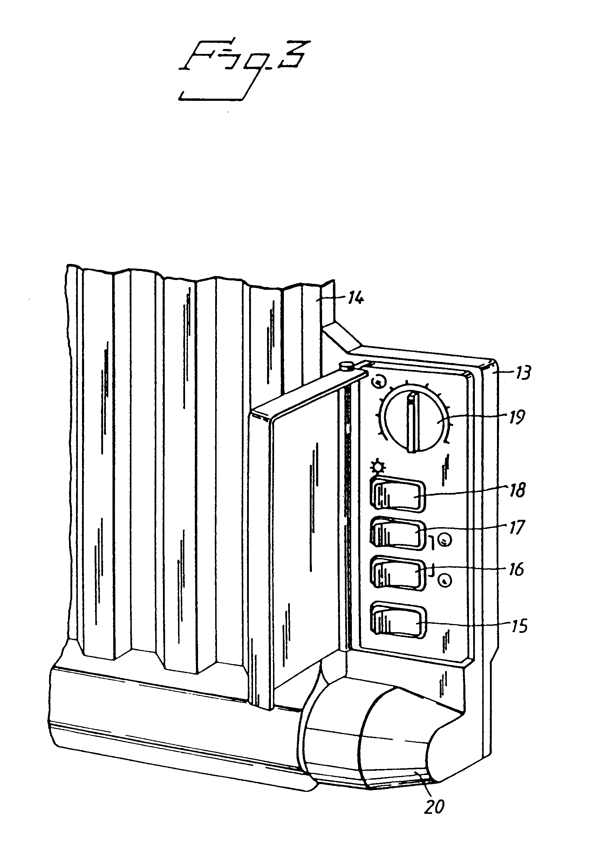

The invention will described in greater detail in the following with reference to a preferred embodiment. Fig. 1 shows a block diagram of an arrangement according to the invention. Fig. 2 shows in greater detail the arrangement of Fig. 1. In Fig. 3 there is shown an arrangement according to the invention enclosed in a unit connected to a radiator body.

In Fig. 1 there is shown an arrangement according to the invention comprising a regulating unit 1 for emitting a control signal via line 2 to a power control unit 3 for the immersion heater 4 of an oil-carrying radiator. The control signal could of course also be directed to a power control unit for the heating unit of a conventional radiator. It is also possible to connect the power control unit directly to the regulating unit or to integrate it therein. There is connected to the regulating unit 1 a room temperature sensor 5, a sensor 6 of the inherent temperature, "self-temperature", of the electric radiator, a temperatur adjusting unit 7 having a built-in thermostat for disconnecting the power supply to the immersion heater 4 when the heat set is attained, and a time base 8 to supply a counter in the regulating unit with a frequency, e.g. the mains frequency. In addition there can be connected to the regulating unit a temperature reduction unit 9, a timer unit 10 for regulating the temperature reduction, a thermal protector 11 and a hysteresis adjusting unit 12.

In Fig. 2 the arrangement according to the invention is shown in greater detail, the most important functions for exercising the invention being illustrated. It should be noted here that the described and disclosed arrangement according to the invention can be enclosed in a separate operating and control unit 13, as shown im Fig. 3, which is connected directly to the radiator body 14 with its built-in heating device, for example, the immersion heater 4 of Fig. 1.

Details of Fig. 2 have been provided with the same reference characters as corresponding details of Fig. 1. The sensor shown in Fig. 2 conveys the heat measured in the room space in the form of a signal to the regulating unit 1. In the same way unit 6 conveys a reference signal showing the self-heat of the radiator body to the regulating unit 1. Said self-heat can be measured in many ways. For instance, the surface temperature of the radiator body can be measured, or the temperature of the oil filling the radiator body can be measured. Furthermore, it is possible to measure other temperatures at corresponding radiators, such as the radiation heat of a conventional radiator or the temperature of the stone of a soapstone radiator. However, it has turned out to be handiest to measure the surface temperature, as the operating and regulating unit can be mounted on a radiator body without any mechanical intervention. Here the surface temperature sensor 6 is mounted on unit 13 in such a way that, as far as possible, the mean temperature of the radiator be measured. The signals from the units can e.g. counteract each other so that a temperature signal is obtained in the regulating unit which indicates whether heat is still emitted from the radiator body. This heat can thus be either radiation heat or convection heat. The regulating unit is designed such that it senses the temperature concerned by short intervals, for which reason a strong increase of the heat measured by sensor 5 does not bring with it a rapid increase of power supplied, but the regulating unit is informed by the surface temperature sensor that the radiator is still capable of emitting inherent heat. In a radiator where the heat is carried by oil this means that the radiator will continue to give off the heat of the oil until the normal temperature of the room space has fallen below the temperature set on the temperature adjusting unit 7. Thereby there will be no overheating of the radiator either, which could cause the room temperature sensor to emit a signal to the regulating unit which does not correspond to the actual room temperature.

The regulating unit can be associated with a temperature reduction unit 9 having a temperature adjusting unit 9', which can be intended for a constant temperature or, such as shown, variable temperatures. If a constant temperature is desired, a suitable value can be 4 °C.

The associated clock reference can consist of an external clock or it can be the mains frequency.

Thus the equipment can also include the thermal protector 11, the off/on switch 15 and a temperature reduction operator controlled by switches 16 and 17 shown in Fig. 3. The switch 18 brings about that the operation programmed by means of keys 16 and 17 is restored, to return to what has been set earlier when the switch is reset.

The thermostat handle 19 is calibrated to adjust the output curve of the radiator to the heating object concerned. Such a thermostat should be used which is able to control outputs from 300 W to 2000 W and are available in designs for 230 V and 400 V. A projection 20 is provided at the bottom of unit 13 to be connected to the immersion heater mounted in the oil-carrying radiator.

The arrangement according to the invention has been disclosed above with reference to the embodiment shown in the figures. However, the arrangement is of course not limited to this embodiment but can be modified within the scope of the appended claims.

## Claims

1. An arrangement for regulating the output of an electronically controlled radiator (14), preferably such a radiator which stores heat, the arrangement including an adjustable thermostatic means (7) for setting the desired room temperature, and room temperature sensing means (5) which senses the temperature attained in the room space,
characterized in that the arrangement includes, in addition, means (6) for sensing the inherent heat of the radiator (14), its "self-heat", and that a regulating unit (1) is provided for counteracting power supply for heating when the self-heat is sufficient.

2. An arrangement according to claim 1, characterized in that the room temperature and the temperature of the radiator (14) are adapted to be supplied to said regulating unit in the form of a resulting signal, and that said temperature sensing means (5, 6) for this purpose are adapted such that their emitted signals counteract each other.

3. An arrangement according to claim 1 or 2, characterized in that the units (1, 3, 5-12) for controlling the power supply to the radiator (14) are arranged in a separate unit (13) which can be mounted on a radiator body.

4. An arrangement according to any of the preceding claims,
characterized in that a time base unit (8) is connected to the regulating unit (1) and cooperates with a counter so that a comparison of sensed temperatures takes place for short interval compensation of the self-heat.

5. An arrangement according to claim 4, characterized in that said time base unit (8) consists of the mains frequency, e.g. 50 Hz.

6. An arrangement according to any of the preceding claims,
characterized in that a temperature reducing unit (9) is connected to the regulating unit (1).

7. An arrangement according to claim 6, characterized in that a timer unit (10) is connected to the regulating unit (1) for cooperation with said temperature reducing unit (9).

8. An arrangement according to any of the preceding claims,
characterized in that a thermal protector (11) is connected to the regulating unit.

9. An arrangement according to any of the preceding claims,
characterized in that a hysteresis adjusting unit (12) is connected to the regulating unit (1).
